# FASCICULE DE BREVET EUROPEEN

(11) **EP 2 732 909 B1**
(45) Date de publication et mention de la délivrance du brevet: **22.03.2017**
(21) Numéro de dépôt: 13190749.5
(22) Date de dépôt: 29.10.2013
(51) Int. Cl.: B23P 19/08, B25B 23/02, B25B 23/00, B65D 25/10, B65D 71/70, B65G 47/14, F16B 27/00

(54) **Dispositif et procédé de préparation d'ensembles vis et rondelles**
Vorrichtung und Verfahren zur Herstellung von Kombischrauben
Device and method for preparing screw and washer assemblies

(30) Priorité: 16.11.2012 FR 1203070
(43) Date de publication de la demande: 21.05.2014
(73) Titulaire: Thales, 92400 Courbevoie (FR)
(72) Inventeur: Fournie, Christophe, 31270 FROUZINS (FR)
(74) Mandataire: Derval, Estelle

(56) Documents cités:
- JP-A- H0 929 559
- JP-A- H1 029 119
- JP-A- H02 243 227
- JP-A- S51 118 260
- JP-A- 2000 318 829
- JP-A- 2004 034 242
- JP-U- S51 130 183

## Description

L'invention se situe dans le domaine de l'assemblage mécanique par vissage. Elle concerne un dispositif de préparation d'ensembles vis et rondelles comprenant chacun une vis et une rondelle devant être disposée autour de la tige filetée de la vis selon le préambule de la revendication 1. L'invention concerne également un procédé de préparation d'ensembles vis et rondelles utilisant un tel dispositif selon le préambule de la revendication 11.

Un tel dispositif et un tel procédé sont décrits dans le document JP S51 130183.

Dans le domaine de l'assemblage mécanique par vissage, il est bien connu d'utiliser des rondelles pour augmenter la surface de serrage des têtes de vis. Une rondelle est généralement constituée d'un disque percé en son centre pour permettre le passage d'une tige filetée. Le diamètre du perçage est sensiblement supérieur au diamètre nominal de la tige filetée, et le diamètre extérieur du disque est supérieur au diamètre de la tête de vis. La mise en place de rondelles autour des tiges filetées de vis est une opération consommatrice de temps dès lors qu'il s'agit de préparer plusieurs centaines voire plusieurs milliers d'ensembles vis et rondelles. Dans certaines industries, par exemple dans l'industrie automobile, des robots d'assemblage permettent de mettre en place une rondelle sur chaque vis de façon automatisée. Cependant, une telle automatisation peut s'avérer être inappropriée dans d'autres secteurs, par exemple dans le secteur de l'aéronautique spatial, pour le montage d'équipements sur des satellites. Dans ce dernier secteur, l'échelle de production est insuffisante pour justifier l'implantation de lignes de montage automatisées. En outre, le recours à des robots d'assemblage implique en général la formation de poussières, dont la présence doit impérativement être évitée. Ainsi, la mise en place des rondelles autour des vis est généralement faite manuellement par un opérateur. Le document JP S51 130183 divulgue un dispositif de préparation d'ensembles de vis et rondelles comprenant des premiers et deuxièmes tamis. L'opérateur pose individuellement les vis les unes à côté des autres sur une surface adhésive d'une plaque, la tige filetée des vis étant dirigée vers le haut, puis ajoute une rondelle autour de chaque vis. Ces opérations sont d'autant plus délicates que les dimensions des vis et des rondelles sont faibles. Il se présente ainsi un risque supplémentaire de faire tomber les vis et les rondelles lors de leur préparation.

Un but de l'invention est notamment de fournir un dispositif qui soit de conception simple et économique, et qui permette de former une pluralité d'ensembles vis et rondelles dans une période de temps limitée. A cet effet, l'invention a pour objet un dispositif de préparation d'ensembles vis et rondelles où chaque ensemble comprend une vis et une rondelle devant être disposée autour de la tige filetée de la vis. Le dispositif comprend :
▪ un premier tamis pour les vis comportant des premiers évidements aptes à orienter toutes les vis selon une même direction et un même sens, et à les positionner selon une disposition prédéterminée, et
▪ un deuxième tamis pour les rondelles comportant des deuxièmes évidements aptes à les positionner selon la même disposition prédéterminée.

Le premier tamis est formé sur une première face d'une plaque et le deuxième tamis sur une deuxième face de la plaque.

Le nombre d'éléments du dispositif est ainsi limité.

Les premiers évidements comportent par exemple une première série de rainures permettant de recevoir la tige filetée des vis, et d'aligner les vis selon des lignes. Ils peuvent en outre comporter une deuxième série de rainures pour caler les vis le long des rainures de la première série. Les rainures de la première série sont par exemple sensiblement rectilignes et parallèles entre elles.

Les deuxièmes évidements comportent par exemple une troisième série de rainures au fond desquelles les rondelles peuvent venir en appui. La hauteur de ces rainures peut être supérieure ou inférieure à l'épaisseur des rondelles. Selon une forme particulière de réalisation, le deuxième tamis comporte une quatrième série de rainures de manière à permettre le passage d'une tige filetée de vis dans chaque rondelle au-delà du fond des rainures de la troisième série.

Le dispositif de préparation d'ensembles vis et rondelles peut en outre comprendre un cadre apte à venir entourer le premier tamis de manière à y retenir les vis, le cadre étant également apte à venir entourer le deuxième tamis de manière à y retenir les rondelles.

Le dispositif de préparation d'ensembles vis et rondelles comprend avantageusement une plaque support comportant une surface adhésive sur laquelle les têtes des vis sont aptes à venir adhérer.

L'invention a également pour objet un procédé de préparation d'ensembles vis et rondelles, chaque ensemble comprenant une vis et une rondelle devant être disposée autour de la tige filetée de la vis. Le procédé comprend les étapes suivantes :
▪ verser un ensemble de vis sur une surface d'un premier tamis, ledit tamis comprenant des premiers évidements aptes à orienter toutes les vis selon une même direction et un même sens, et à les positionner selon une disposition prédéterminée,
▪ secouer le premier tamis de manière à ce que chaque vis vienne s'orienter et se positionner dans les premiers évidements,
▪ placer une surface adhésive d'une plaque support sur les têtes des vis de manière à ce que toutes les vis adhèrent à ladite plaque dans la disposition prédéterminée,
▪ retirer le premier tamis,
▪ verser un ensemble de rondelles sur une surface d'un deuxième tamis, ledit tamis comprenant des deuxièmes évidements aptes à positionner les rondelles selon la même disposition prédéterminée,
▪ secouer le deuxième tamis de manière à ce que chaque rondelle vienne se positionner dans les deuxièmes évidements,
▪ placer la plaque support avec les vis sur le deuxième tamis de manière à faire coïncider chaque tige filetée des vis avec un trou d'une rondelle,
▪ retourner la plaque support et le deuxième tamis de manière à ce que les rondelles viennent en appui sur une surface d'appui des têtes de vis sous l'effet de la pesanteur,
▪ retirer le deuxième tamis.

Le premier tamis est formé sur une première face d'une plaque et le deuxième tamis sur une deuxième face de la plaque.

Selon une forme particulière de réalisation, le procédé comprend, en outre, une étape consistant à entourer le premier tamis par un premier cadre permettant de retenir les vis sur la surface du premier tamis.

De même, le procédé peut comprendre une étape consistant à entourer le deuxième tamis par un deuxième cadre permettant de retenir les rondelles sur la surface du deuxième tamis.

L'invention présente notamment l'avantage de permettre la préparation d'ensembles vis et rondelles de faible diamètre sans minutie supplémentaire par rapport à des vis et des rondelles de plus grand diamètre.

L'invention sera mieux comprise et d'autres avantages apparaîtront à la lecture de la description qui va suivre, faite en regard de dessins annexés sur lesquels :
- la figure 1 représente, dans une vue en perspective, un dispositif de préparation d'ensembles vis et rondelles selon l'invention ;
- la figure 2 représente le dispositif de la figure 1 dans une vue de côté ;
- la figure 3 représente le dispositif de la figure 1 dans une vue de dessus ;
- la figure 4 représente le dispositif de la figure 1 dans une vue de dessous ;
- la figure 5 représente, dans une vue de côté, un détail de réalisation d'un tamis pour les vis du dispositif de la figure 1 ;
- la figure 6 représente, dans une vue de côté, un détail de réalisation d'un tamis pour les rondelles du dispositif de la figure 1 ;
- la figure 7 représente un exemple d'étapes du procédé de préparation d'ensembles vis et rondelles selon l'invention.

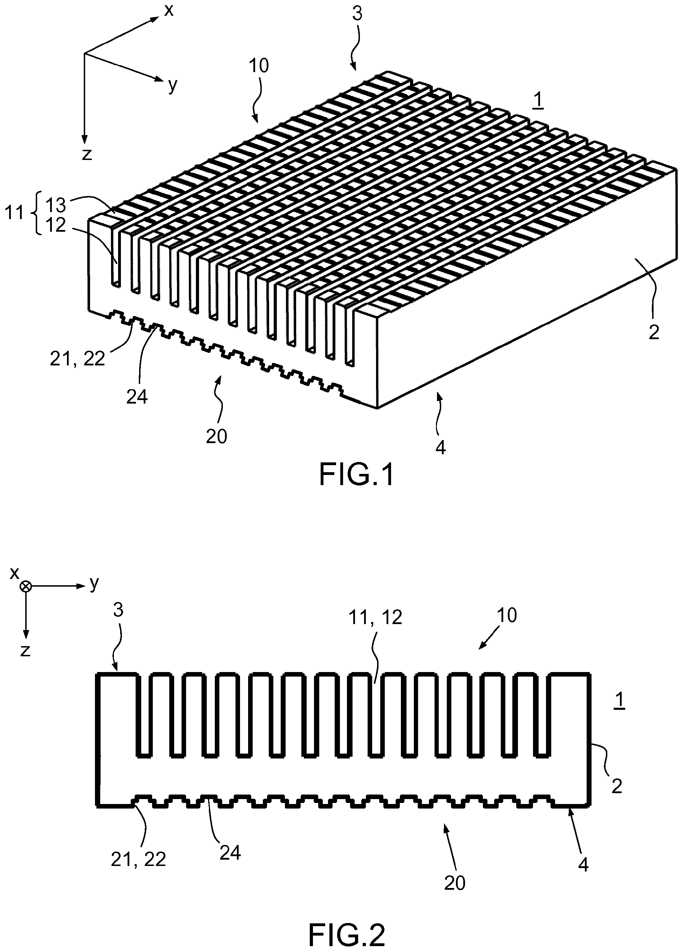

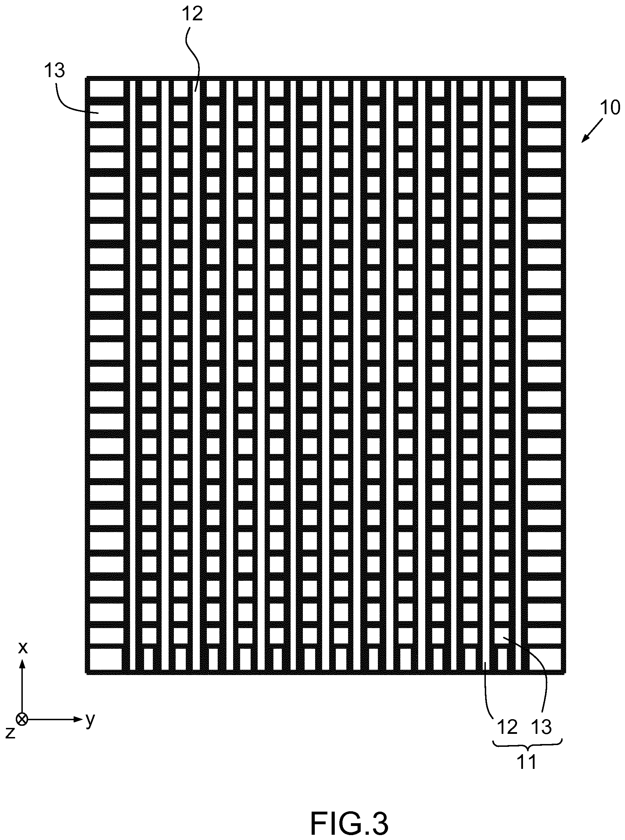

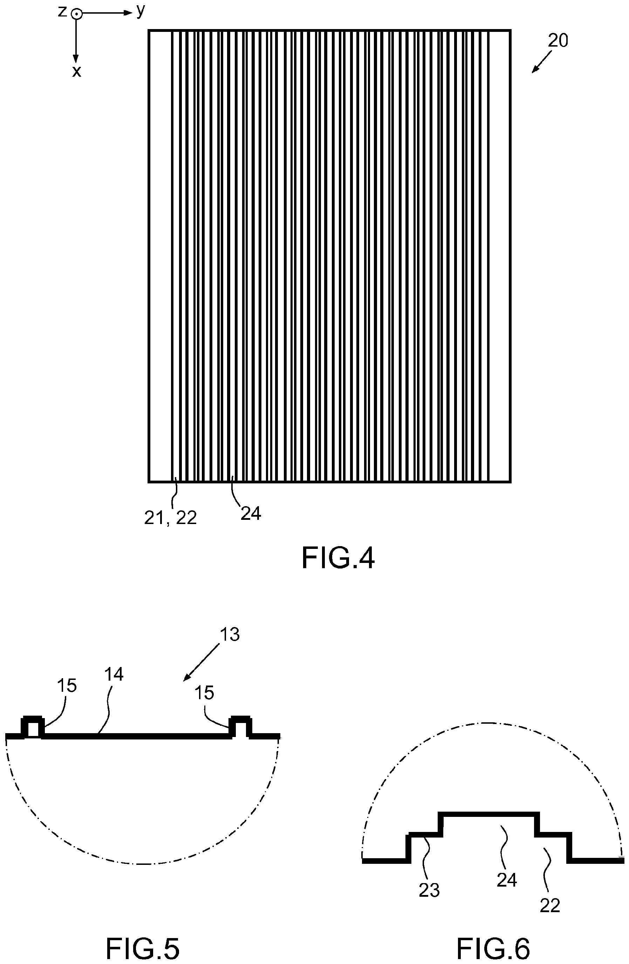

Les figures 1 à 6 illustrent un exemple de réalisation d'un dispositif de préparation d'ensembles vis et rondelles selon l'invention. Les figures 1 à 4 représentent le dispositif dans une vue en perspective, dans une vue de côté, dans une vue de dessus, et dans une vue de dessous, respectivement, et les figures 5 et 6 représentent des détails de réalisation du dispositif dans des vues de côté. Comme le montrent plus particulièrement les figures 1 et 2, le dispositif 1 est formé à partir d'une plaque 2, par exemple en aluminium, comportant une première surface 3 et une deuxième surface 4, parallèle à la première. La plaque 2 comporte également un tamis 10 pour les vis formé sur la première surface 3 et un tamis 20 pour les rondelles formé sur la deuxième surface 4. Le tamis 10 comprend des évidements 11 dont la forme et les dimensions sont prévues pour permettre d'orienter un ensemble de vis de mêmes dimensions selon une même direction et un même sens. En l'occurrence, toutes les vis doivent être orientées parallèlement à un axe Z, et dans le sens de cet axe Z, c'est-à-dire que les vis doivent avoir leur tige filetée dirigée vers le bas. Les évidements 11 doivent également être aptes à positionner les vis selon une disposition prédéterminée. Autrement dit, chaque vis doit venir se positionner individuellement à l'un des emplacements prévus sur le tamis 10. Dans l'exemple de réalisation représenté, les évidements 11 comportent une première série de rainures 12 et une deuxième série de rainures 13 réalisées dans la plaque 2 et s'ouvrant sur la première surface 3. Les rainures 12 de la première série sont rectilignes et parallèles à l'axe X. Elles sont dimensionnées pour recevoir la tige filetée des vis, mais pas leur tête. Ainsi, la largeur des rainures 12 est supérieure ou égale au diamètre nominal de la tige filetée des vis, et strictement inférieure au diamètre de la tête des vis. La profondeur des rainures 12 doit être au moins égale à la longueur de la tige filetée des vis. Les rainures 12 permettent donc d'orienter les vis parallèlement à l'axe Z et dans le sens de cet axe Z, ainsi que de les aligner le long de lignes parallèles à l'axe X. Les rainures 13 de la deuxième série sont rectilignes et parallèles à l'axe Y. Elles sont centrées sur des axes espacés deux à deux d'une distance égale au diamètre extérieur des rondelles, et sont dimensionnées pour recevoir la tête des vis. En particulier, la largeur des rainures 13 est légèrement supérieure ou égale au diamètre maximal de la tête des vis. La surface d'appui de chaque tête de vis, c'est-à-dire la surface annulaire entourant l'extrémité non libre de la tige filetée de la vis, peut ainsi venir en appui sur le fond 14 d'une rainure 13, les parois 15 des rainures 13 formant des moyens pour caler les vis le long des rainures 12 de la première série, comme représenté sur la figure 5. Globalement, les rainures 12 et 13 de la première et de la deuxième série permettent de positionner les vis dans un plan XY selon une disposition matricielle, comme cela apparaît clairement sur la figure 3. Le tamis 20 pour les rondelles comprend des évidements 21 dont la forme et les dimensions sont prévues pour permettre de positionner les rondelles selon la même disposition prédéterminée. Dans l'exemple de réalisation représenté sur la figure 1, les évidements 21 prennent la forme d'une troisième série de rainures 22 réalisées dans la plaque 2 et s'ouvrant sur la deuxième surface 4. Les rainures 22 sont rectilignes et parallèles à l'axe X, selon la même disposition que les rainures 12 de la première série du tamis 10 pour les vis. En particulier, les rainures 22 sont espacées deux à deux avec une distance identique à celle entre deux rainures voisines 12 du tamis 10. Les rainures 22 de la troisième série sont dimensionnées pour recevoir des rondelles, l'une des surfaces d'appui des rondelles devant venir en appui sur le fond 23 des rainures 22, comme représenté sur la figure 6. En particulier, la largeur des rainures 22 est légèrement supérieure ou égale au diamètre extérieur des rondelles. Les rainures 22 permettent donc d'aligner les rondelles les unes à côté des autres le long de lignes parallèles à l'axe X. Le tamis 20 comprend aussi de préférence une quatrième série de rainures 24. Les rainures 24 sont rectilignes et parallèles à l'axe X. Chaque rainure 24 est réalisée sur le fond 23 d'une rainure 22. Autrement dit, chaque rainure 24 s'ouvre sur le fond 23 de l'une des rainures 22. Les rainures 22 et 24 de la troisième et de la quatrième série forment ainsi une rainure dite étagée. Chaque rainure 24 est de préférence centrée par rapport aux parois de la rainure 22 dans laquelle elle s'inscrit. Les rainures 24 sont dimensionnées pour pouvoir recevoir l'extrémité libre de la tige filetée des vis. Elles permettent à l'extrémité libre de la tige filetée de chaque vis de traverser la rondelle au-delà du fond 23 des rainures 22.

Selon une forme particulière de réalisation, non représentée, le tamis 20 pour les rondelles peut aussi comporter des moyens pour caler les rondelles le long des rainures 22. De manière analogue au tamis 10 pour les vis, ces moyens peuvent prendre la forme de rainures orientées sensiblement parallèlement à l'axe Y. Ces rainures et les rainures 22 pourraient aussi être remplacées par des alésages réalisés à chaque emplacement d'une rondelle. De même, les rainures 24 pourraient être remplacées par des alésages concentriques aptes à recevoir les tiges filetées des vis.

Les dimensions du dispositif de préparation d'ensembles vis et rondelles selon l'invention dépendent naturellement des dimensions des vis et des rondelles. Elles dépendent en particulier du diamètre nominal des vis, de la longueur de leur tige filetée, du diamètre maximal de leur tête, de l'épaisseur des rondelles et de leur diamètre extérieur. Selon une forme particulière de réalisation, la hauteur des rainures 22 dans lesquelles viennent se loger les rondelles est inférieure à l'épaisseur des rondelles. Cette forme de réalisation permet d'empêcher le maintien de plusieurs rondelles empilées les unes sur les autres. À titre d'exemple, quelques dimensions du dispositif sont données pour des vis de diamètre nominal égal à 4 millimètres (mm). Dans cet exemple, la largeur des rainures 12 de la première série et celle des rainures 24 de la quatrième série sont sensiblement égales à 4,2 mm. La largeur des rainures 22 de la troisième série est égale à 7,95 mm, et la largeur des rainures 13 est égale à 7,0 mm. La profondeur des rainures 12 est égale à 50,0 mm. La profondeur des rainures 13, celle des rainures 22 et celle des rainures 24 sont respectivement égales à 0,5 mm, 1,2 mm et 1,0 mm.

Dans l'exemple de réalisation représenté sur les figures 1 à 6, il a été considéré que les vis présentaient une tête plate, c'est-à-dire une tête dont la surface d'appui est sensiblement plane, et que les rondelles étaient des rondelles plates. Cependant, l'invention s'applique également au cas où les têtes de vis sont fraisées. Les évidements 11 du tamis pour les vis sont alors adaptés en conséquence. En l'occurrence, les rainures 13 de la deuxième série peuvent être remplacées par des fraisures s'ouvrant sur la surface 3, une fraisure étant réalisée à chaque emplacement d'une vis. De manière analogue, les rondelles peuvent être des rondelles élastiques, par exemple des rondelles coniques, les évidements 21 du tamis pour les rondelles étant aussi adaptés en conséquence. En particulier, les rainures 22 de la troisième série peuvent être remplacées par des fraisures s'ouvrant sur la surface 4, une fraisure étant réalisée à chaque emplacement d'une rondelle.

Par ailleurs, il a été considéré que le tamis pour les vis et le tamis pour les rondelles étaient réalisés sur deux faces opposées d'une même pièce. Un tel mode de réalisation présente en effet notamment l'avantage de simplifier, lors de la réalisation des tamis, l'alignement des moyens de positionnement des vis, c'est-à-dire les évidements 11, avec les moyens de positionnement des rondelles, c'est-à-dire les évidements 21. De même, l'alignement des tiges filetées des vis avec les rondelles est facilité. Néanmoins, il est possible de réaliser le tamis pour les vis et le tamis pour les rondelles sur deux pièces distinctes. Il a également été considéré que les surfaces 3 et 4 de la plaque 2 sur lesquelles sont réalisés les tamis 10 et 20 étaient des surfaces planes et parallèles entre elles. De telles surfaces sont simples à réaliser. Cependant, ces surfaces peuvent présenter un profil différent, pour autant que les deux surfaces présentent un même profil.

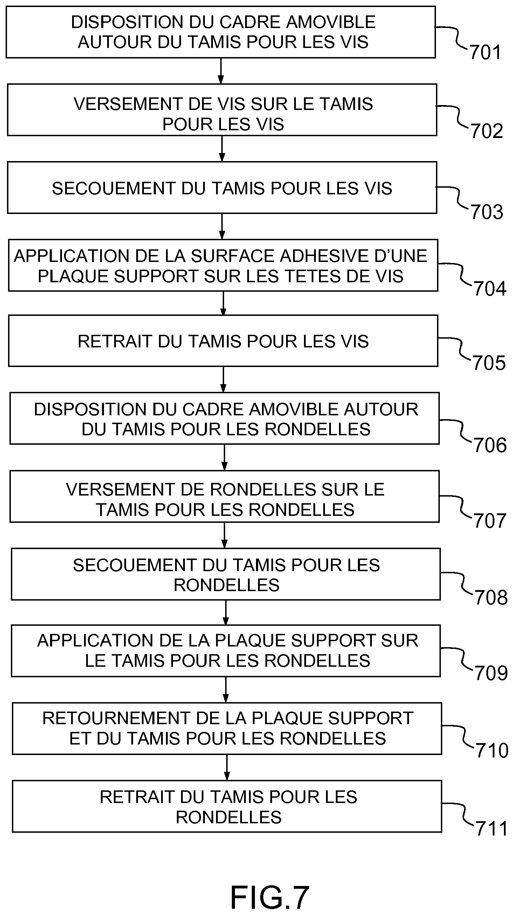

La figure 7 représente un exemple de procédé de préparation d'ensembles vis et rondelles selon l'invention. Ce procédé repose sur l'utilisation du dispositif de préparation d'ensembles vis et rondelles tel que décrit précédemment. À titre d'exemple, on considérera l'utilisation du dispositif 1 décrit en référence aux figures 1 à 6. Afin de faciliter l'utilisation de ce dispositif, il est possible de prévoir, en outre, un cadre amovible apte à venir entourer la plaque 2, ainsi qu'une plaque support adaptée pour s'introduire dans le cadre amovible. Plutôt que d'utiliser un cadre amovible, un cadre pourrait aussi être fixé autour de chacune des surfaces 3 et 4 de la plaque 2. La plaque support comprend une surface adhésive présentant un profil identique au profil de la surface 3 de la plaque 2. L'adhésif est par exemple un adhésif acrylique sensible à la pression. Dans une première étape 701, le cadre amovible est disposé autour de la plaque 2 du dispositif 1, ladite plaque 2 étant positionnée de manière à ce que sa surface 3 soit orientée vers le haut. Ainsi, le tamis 10 pour les vis est accessible. Dans une deuxième étape 702, un ensemble de vis de mêmes dimensions est versé sur la surface 3. Les vis peuvent être versées en vrac, c'est-à-dire sans prendre soin à leur position et à leur orientation. Dans une troisième étape 703, la plaque 2 est secouée avec le cadre amovible de manière à ce que chaque vis vienne s'orienter et se positionner dans les évidements 11 du tamis 10 pour les vis. Autrement dit, la tige filetée de chaque vis vient se glisser dans l'une des rainures 12, puis sa tête vient se positionner dans l'une des rainures 13. Dans une quatrième étape 704, la surface adhésive de la plaque support est mise en contact avec les têtes de vis. La surface adhésive doit permettre le maintien des vis sous l'effet de leur propre poids. Dans une cinquième étape 705, le tamis 10 est retiré. On dispose alors d'un ensemble de vis fixées temporairement par leur tête sur la plaque support. Les vis sont toutes orientées parallèlement les unes aux autres et sont disposées sous forme d'une matrice. Dans une sixième étape 706, le cadre amovible est disposé autour de la plaque 2, ladite plaque 2 étant positionnée de manière à ce que sa surface 4 soit orientée vers le haut. Ainsi, le tamis 20 pour les rondelles est accessible. Dans une septième étape 707, un ensemble de rondelles de mêmes dimensions est versé sur la surface 4. Comme pour les vis, les rondelles peuvent être versées en vrac. Dans une huitième étape 708, la plaque 2 est à nouveau secouée avec le cadre amovible de manière à ce que chaque rondelle vienne se positionner dans les évidements 21 du tamis 20 pour les rondelles. En particulier, l'une des surfaces d'appui de chaque rondelle vient en appui contre le fond 23 de l'une des rainures 22. Afin d'assurer le positionnement correct des rondelles le long des rainures 22, il est possible, à la fin de l'étape 708, d'incliner la plaque 2 de manière à ce que les rondelles viennent en contact les unes contre les autres dans chaque rainure 22. Dans une neuvième étape 709, la plaque support sur laquelle sont disposées les vis est placée sur le tamis 20 pour les rondelles de manière à faire coïncider chaque tige filetée des vis avec le trou d'une rondelle. Cette mise en correspondance peut notamment être facilitée par la présence du cadre amovible. Dans une dixième étape 710, la plaque support et le tamis 20 pour les rondelles sont retournés. Sous l'effet de la pesanteur, les rondelles viennent en appui sur la surface d'appui des têtes de vis. Le tamis 20 pour les rondelles peut ensuite être retiré dans une étape 711. On dispose alors du même ensemble de vis obtenu à l'issue de l'étape 705 mais avec une rondelle placée sur chaque vis. Avantageusement, le nombre de rondelles versées sur le tamis 20 lors de l'étape 707 est supérieur au nombre de vis versées sur le tamis 10 lors de l'étape 702. Ainsi, il est possible de s'assurer du fait qu'une rondelle soit présente sur chaque vis à l'issue du procédé. Dans un tel cas, les rondelles qui ne sont pas venues s'insérer dans la tige filetée d'une vis tombent du tamis 20 pour les rondelles lors de l'étape 710 de retournement.

## Revendications

1. Dispositif de préparation d'ensembles vis et rondelles, chaque ensemble comprenant une vis et une rondelle devant être disposée autour de la tige filetée de la vis, le dispositif (1) comprenant :
▪ un premier tamis (10) pour les vis comportant des premiers évidements (11, 12, 13) aptes à orienter toutes les vis selon une même direction et un même sens, et à les positionner selon une disposition prédéterminée, et
▪ un deuxième tamis (20) pour les rondelles comportant des deuxièmes évidements (21, 22) aptes à les positionner selon la même disposition prédéterminée,
caractérisé en ce quele premier tamis (10) est formé sur une première face (3) d'une plaque (2) et le deuxième tamis (20) sur une deuxième face (4) de la plaque (2).

2. Dispositif selon la revendication 1, dans lequel les premiers évidements (11) comportent une première série de rainures (12) permettant de recevoir la tige filetée des vis, et d'aligner les vis selon des lignes.

3. Dispositif selon la revendication 2, dans lequel les premiers évidements (11) comportent une deuxième série de rainures (13) pour caler les vis le long des rainures (12) de la première série.

4. Dispositif selon l'une quelconque des revendications 2 et 3, dans lequel les rainures (12) de la première série sont sensiblement rectilignes et parallèles entre elles.

5. Dispositif selon l'une quelconque des revendications précédentes, dans lequel les deuxièmes évidements (21) comportent une troisième série de rainures (22) au fond desquelles les rondelles peuvent venir en appui.

6. Dispositif selon la revendication 5, dans lequel la hauteur des rainures (22) de la troisième série est supérieure à l'épaisseur des rondelles.

7. Dispositif selon la revendication 5, dans lequel la hauteur des rainures (22) de la troisième série est inférieure à l'épaisseur des rondelles.

8. Dispositif selon l'une quelconque des revendications 5 à 7, dans lequel le deuxième tamis (20) comporte une quatrième série de rainures (24) de manière à permettre le passage d'une tige filetée de vis dans chaque rondelle au-delà du fond (23) des rainures (22) de la troisième série.

9. Dispositif selon l'une quelconque des revendications précédentes comprenant, en outre, un cadre apte à venir entourer le premier tamis (10) de manière à y retenir les vis, le cadre étant également apte à venir entourer le deuxième tamis (20) de manière à y retenir les rondelles.

10. Dispositif selon l'une quelconque des revendications précédentes comprenant, en outre, une plaque support comportant une surface adhésive sur laquelle les têtes des vis sont aptes à venir adhérer.

11. Procédé de préparation d'ensembles vis et rondelles, chaque ensemble comprenant une vis et une rondelle devant être disposée autour de la tige filetée de la vis, le procédé comprenant les étapes suivantes :
▪ verser (702) un ensemble de vis sur une surface (3) d'un premier tamis (10), ledit premier tamis (10) comprenant des premiers évidements (11, 12, 13) aptes à orienter toutes les vis selon une même direction et un même sens, et à les positionner selon une disposition prédéterminée,
▪ secouer (703) le premier tamis (10) de manière à ce que chaque vis vienne s'orienter et se positionner dans les premiers évidements (11, 12, 13), **caractérisé en ce qu'**il consiste en outre à
▪ placer (704) une surface adhésive d'une plaque support sur les têtes des vis de manière à ce que toutes les vis adhèrent à ladite plaque dans la disposition prédéterminée,
▪ retirer (705) le premier tamis (10),
▪ verser (707) un ensemble de rondelles sur une surface (4) d'un deuxième tamis (20), ledit tamis (20) comprenant des deuxièmes évidements (21, 22) aptes à positionner les rondelles selon la même disposition prédéterminée,
▪ secouer (708) le deuxième tamis (20) de manière à ce que chaque rondelle vienne se positionner dans les deuxièmes évidements (21, 22),
▪ placer (709) la plaque support avec les vis sur le deuxième tamis (20) de manière à faire coïncider chaque tige filetée des vis avec un trou d'une rondelle,
▪ retourner (710) la plaque support et le deuxième tamis (20) de manière à ce que les rondelles viennent en appui sur une surface d'appui des têtes de vis sous l'effet de la pesanteur,
▪ retirer (711) le deuxième tamis (20),
le premier tamis (10) étant formé sur une première face (3) d'une plaque (2) et le deuxième tamis (20) sur une deuxième face (4) de la plaque (2).

12. Procédé selon la revendication 11 comprenant, en outre, une étape (701) consistant à entourer le premier tamis (10) par un premier cadre permettant de retenir les vis sur la surface (3) du premier tamis (10).

13. Procédé selon l'une quelconque des revendications 11 et 12 comprenant, en outre, une étape (706) consistant à entourer le deuxième tamis (20) par un deuxième cadre permettant de retenir les rondelles sur la surface (4) du deuxième tamis (20).

## Patentansprüche

1. Vorrichtung zur Herstellung von Schrauben- und Scheibenbaugruppen, wobei jede Baugruppe eine Schraube und eine Scheibe zum Anordnen um den Gewindeschaft der Schraube umfasst, wobei die Vorrichtung (1) Folgendes umfasst:
• ein erstes Sieb (10) für die Schrauben, das erste Aussparungen (11, 12, 13) zum Orientieren aller Schrauben in einer selben Richtung und einem selben Sinn und zum Positionieren derselben in einer vorbestimmten Anordnung umfasst, und
• ein zweites Sieb (20) für die Scheiben, das zweite Aussparungen (21, 22) für deren Positionierung in derselben vorbestimmten Anordnung umfasst,
**dadurch gekennzeichnet, dass** das erste Sieb (10) auf einer ersten Fläche (3) einer Platte (2) und das zweite Sieb (20) auf einer zweiten Fläche (4) der Platte (2) ausgebildet ist.

2. Vorrichtung nach Anspruch 1, bei der die ersten Aussparungen (11) eine erste Serie von Rillen (12) umfassen, die die Aufnahme des Gewindeschafts der Schrauben und die Ausrichtung der Schrauben in Reihen zulässt.

3. Vorrichtung nach Anspruch 2, bei der die ersten Aussparungen (11) eine zweite Serie von Rillen (13) zum Verkeilen der Schrauben entlang den Rillen (12) der ersten Serie umfassen.

4. Vorrichtung nach einem der Ansprüche 2 und 3, bei der die Rillen (12) der ersten Serie im Wesentlichen geradlinig und parallel zueinander sind.

5. Vorrichtung nach einem der vorherigen Ansprüche, bei der die zweiten Aussparungen (21) eine dritte Serie von Rillen (22) umfassen, an deren Boden die Scheiben zur Anlage kommen können.

6. Vorrichtung nach Anspruch 5, bei der die Höhe der Rillen (22) der dritten Serie größer ist als die Dicke der Scheiben.

7. Vorrichtung nach Anspruch 5, bei der die Höhe der Rillen (22) der dritten Serie geringer ist als die Dicke der Scheiben.

8. Vorrichtung nach einem der Ansprüche 5 bis 7, bei der das zweite Sieb (20) eine vierte Serie von Rillen (24) umfasst, die die Passage eines Schraubgewindeschafts in jede Scheibe jenseits des Bodens (23) der Rillen (22) der dritten Serie zulassen.

9. Vorrichtung nach einem der vorherigen Ansprüche, die ferner einen Rahmen zum Einfassen des ersten Siebs (10) umfasst, um die Schrauben darin festzuhalten, wobei der Rahmen auch das zweite Sieb (20) einfassen kann, um die Scheiben darin festzuhalten.

10. Vorrichtung nach einem der vorherigen Ansprüche, die ferner eine Tragplatte umfasst, die eine Haftfläche aufweist, an der die Köpfe der Schrauben haften können.

11. Verfahren zur Herstellung von Schrauben- und Scheibenbaugruppen, wobei jede Baugruppe eine Schraube und eine Scheibe zum Anordnen um den Gewindeschaft der Schraube umfasst, wobei das Verfahren die folgenden Schritte beinhaltet:
• Kippen (702) einer Schraubenbaugruppe auf eine Oberfläche (3) eines ersten Siebs (10), wobei das erste Sieb (10) erste Aussparungen (11, 12, 13) zum Orientieren aller Schrauben in einer selben Richtung und einem selben Sinn und zum Positionieren derselben in einer vorbestimmten Anordnung umfasst,
• Rütteln (703) des ersten Siebs (10) auf eine solche Weise, dass alle Schrauben in den ersten Aussparungen (11, 12, 13) orientiert und positioniert werden, **dadurch gekennzeichnet, dass** es ferner die folgenden Schritte beinhaltet:
• Platzieren (704) einer Haftfläche einer Tragplatte auf den Köpfen der Schrauben, so dass alle Schrauben an der Platte in der vorbestimmten Anordnung haften,
• Abziehen (705) des ersten Siebs (10),
• Kippen (707) einer Scheibenbaugruppe auf eine Oberfläche (4) eines zweiten Siebs (20), wobei das Sieb (20) zweite Aussparungen (21, 22) zum Positionieren der Scheiben in derselben vorbestimmten Anordnung umfasst,
• Rütteln (708) des zweiten Siebs (20), so dass alle Scheiben in den zweiten Aussparungen (21, 22) positioniert werden,
• Platzieren (709) der Tragplatte mit den Schrauben auf dem zweiten Sieb (20), um zu bewirken, dass jeder Gewindeschaft der Schrauben mit einem Loch einer Scheibe übereinstimmt,
• Zurückführen (710) der Tragplatte und des zweiten Siebs (20), so dass die Scheiben an einer Anlagefläche der Schraubenköpfe unter der Wirkung von Schwerkraft zur Anlage kommen,
• Abziehen (711) des zweiten Siebs (20),
wobei das erste Sieb (10) auf einer ersten Fläche (3) einer Platte (2) und das zweite Sieb (20) auf einer zweiten Fläche (4) der Platte (2) gebildet werden.

12. Verfahren nach Anspruch 11, das ferner einen Schritt (701) beinhaltet, der darin besteht, das erste Sieb (10) mit einem ersten Rahmen einzufassen, so dass die Schrauben auf der Oberfläche (3) des ersten Siebs (10) festgehalten werden können.

13. Verfahren nach einem der Ansprüche 11 und 12, das ferner einen Schritt (706) beinhaltet, der darin besteht, das zweite Sieb (20) mit einem zweiten Rahmen einzufassen, so dass die Scheiben auf der Oberfläche (4) des zweiten Siebs (20) festgehalten werden können.

## Claims

1. Device for preparing screw and washer assemblies, each assembly comprising a screw and a washer intended to be disposed around the threaded shank of the screw, the device (1) comprising:
▪ a first rack (10) for the screws, having first recesses (11, 12, 13) that are able to orient all the screws in one and the same direction and one and the same orientation and to position them in a predetermined arrangement, and
▪ a second rack (20) for the washers, having second recesses (21, 22) that are able to position said washers in the same predetermined arrangement,
**characterized in that** the first rack (10) is formed on a first face (3) of a plate (2) and the second rack (20) being formed on a second face (4) of the plate (2).

2. Device according to claim 1, wherein the first recesses (11) have a first series of grooves (12) for receiving the threaded shank of the screws and for aligning the screws in lines.

3. Device according to claim 2, wherein the first recesses (11) have a second series of grooves (13) for wedging the screws along the grooves (12) of the first series.

4. Device according to any one of claims 2 and 3, wherein the grooves (12) of the first series are substantially straight and parallel to one another.

5. Device according to any one of the preceding claims, wherein the second recesses (21) have a third series of grooves (22), on the bottom of which the washers can come to bear.

6. Device according to claim 5, wherein the height of the grooves (22) of the third series is greater than the thickness of the washers.

7. Device according to claim 5, wherein the height of the grooves (22) of the third series is less than the thickness of the washers.

8. Device according to any one of claims 5 to 7, wherein the second rack (20) has a fourth series of grooves (24) so as to allow a threaded screw shank to pass through each washer beyond the bottom (23) of the grooves (22) of the third series.

9. Device according to any one of the preceding claims, furthermore comprising a frame able to surround the first rack (10) so as to retain the screws therein, the frame also being able to surround the second rack (20) so as to retain the washers therein.

10. Device according to any one of the preceding claims, furthermore comprising a support plate having an adhesive surface to which the heads of the screws are able to adhere.

11. Method for preparing screw and washer assemblies, each assembly comprising a screw and a washer intended to be disposed around the threaded shank of the screw, the method comprising the following steps of:
▪ pouring (702) a set of screws onto a surface (3) of a first rack (10), said first rack (10) comprising first recesses (11, 12, 13) that are able to orient all the screws in one and the same direction and one and the same orientation and to position them in a predetermined arrangement,
▪ shaking (703) the first rack (10) so that each screw is oriented and positioned in the first recesses (11, 12, 13),
**characterized in that** it furthermore consists in
▪ placing (704) an adhesive surface of a support plate on the heads of the screws so that all of the screws adhere to said plate in the predetermined arrangement,
▪ removing (705) the first rack (10),
▪ pouring (707) a set of washers onto a surface (4) of a second rack (20), said rack (20) comprising second recesses (21, 22) that are able to position the washers in the same predetermined arrangement,
▪ shaking (708) the second rack (20) so that each washer is positioned in the second recesses (21, 22),
▪ placing (709) the support plate with the screws on the second rack (20) so as to make each threaded shank of the screws coincide with a hole in a washer,
▪ turning over (710) the support plate and the second rack (20) so that the washers come to bear on a bearing surface of the screw heads under the effect of gravity,
▪ removing (711) the second rack (20),
the first rack (10) being formed on a first face (3) of a plate (2) and the second rack (20) being formed on a second face (4) of the plate (2).

12. Method according to claim 11, furthermore comprising a step (701) which consists in surrounding the first rack (10) with a first frame for retaining the screws on the surface (3) of the first rack (10).

13. Method according to any one of claims 11 and 12, furthermore comprising a step (706) which consists in surrounding the second rack (20) with a second frame for retaining the washers on the surface (4) of the second rack (20).
